# EUROPEAN PATENT APPLICATION

(11) **EP 3 415 358 A1**
(43) Date of publication of application: **19.12.2018**
(21) Application number: 18173535.8
(22) Date of filing: 22.05.2018
(51) Int. Cl.: B60K 37/06, G06F 9/445, G06F 3/0488

(54) **A SYSTEM AND METHOD FOR A USER INTERFACE DISPLAY OF AN AGRICULTURAL VEHICLE**

(30) Priority: 08.06.2017 GB 201709155
(71) Applicant: AGCO International GmbH, 8212 Neuhausen am Rheinfall (CH)
(72) Inventor: HACKFORT, Adrian, 87616 Marktoberdorf (DE); WEIGAND, Jan, 87616 Marktoberdorf (DE); ZURL, Thomas, 87616 Marktoberdorf (DE); MARINER, Gerhard, 87616 Marktoberdorf (DE); MUFF, Daniel, 87616 Marktoberdorf (DE); KORNES, Alfred, 87616 Marktoberdorf (DE); LICHTENSTERN, Martin, 87616 Marktoberdorf (DE)
(74) Representative: AGCO Intellectual Property Department

(57) **Abstract**

There is described a system and method for a user interface display (32) of an agricultural vehicle, such as an agricultural tractor or a harvester machine. The user interface is provided with an array of display fields (A, B, C, D, E, F) which can be used to display data tiles showing information relating to an associated system of the agricultural vehicle. A user can select which data tile is displayed in each field of the array. If a user selects the same data tile for adjacent fields of the array, the system and method generates a composite data tile based on the selected data tile, where the composite data tile is adapted to fit the selected adjacent display fields.

## Description

### Field of the Invention

The present invention relates to a system and method for a user interface display of an agricultural vehicle, such as an agricultural tractor or a harvester machine.

### Background of the Invention

In agricultural vehicles such as tractors, harvesters, or applicator machines such as sprayers, there is a need for the vehicle operator to monitor a wide range of data during field operations. Such data may include various sensor readings, map and route data, speed, weather forecasts, camera outputs, etc. In modern agricultural machinery, such data is generally displayed using various visual display units, or VDUs, provided in the cab of the vehicle.

As agricultural vehicles incorporate more sensor technology, accordingly the amount of different data sources to monitor also increases, which can require the use of multiple VDUs to effectively monitor the available data. Alternatively, VDUs can be configured to display multiple run screens, wherein a user can switch between screen displays on the VDU, the different screen displays showing different layouts of information. An example of a display system using different run screens can be found in US Patent Application Publication No. US 2014/0298228 A1.

However, often a user will be limited by the predefined screen layouts of the run screens in terms of the configuration of the displayed information. Additionally, a user is often required to cycle through different run screens in order to view different sets of data which may be relevant to the current operations. This can result in inconvenience to the user, and the distraction of the user's attention when interacting with the VDU to see the relevant information.

As a result, it is an object of the invention to provide a display system and method for an agricultural vehicle having increased flexibility of use, depending on the requirements of the operator.

### Summary of the Invention

Accordingly, there is provided a display method for a user interface display of an agricultural vehicle, the method comprising the steps of:
dividing a user interface display into an array of display fields, wherein the display fields of the array are each adapted to display a data tile showing information relating to an associated system of the agricultural vehicle;
providing a plurality of data tiles associated with different systems of the agricultural vehicle; and
providing a user interface to enable a user to select which data tile is displayed in each display field of the array,
wherein, if the same data tile is selected for display in at least two adjacent display fields, the method further comprises the step of creating a composite data tile based on the selected data tile, the composite data tile adapted to fit the selected adjacent display fields.

By creating a composite data tile based on the selection of adjacent display fields, the method can allow a user to easily select the layout of data tiles in a display, and can configure the display to devote additional screen space to data tiles of greater interest to the user.

Preferably, the step of creating a composite data tile comprises creating an enlarged version of the selected data tile.

Alternatively, the step of creating a composite data tile comprises creating a rearranged version of the selected data tile, wherein information to be displayed by the data tile is repositioned or scaled to adapt to the area of the selected adjacent display fields.

The data tile may simply be enlarged to accommodate the selected adjacent display fields, or the method may rearrange the data of the data tile to more clearly display the required information.

Preferably, the method further comprises the step of providing a list of selectable data tiles for display.

It will be understood that there may be more different types of data tiles for selection than display fields of the array, such that a user can select the data tiles of interest to the user for display. These may be data tiles most relevant to the current operations being performed.

Preferably, the method comprises the steps of: when a user selects a data tile already displayed in the array, displaying an outline indicator of possible composite versions of the selected data tile.

Providing an outline indicator allows the user to easily see which display fields may be selected to generate an enlarged or composite data tile for the tile selected. The user can then easily decide how to generate a composite data tile for that information.

The indicator may comprise an at least partly transparent outline of a composite data tile. The indicator may indicate the size, shape, and/or layout of the composite data tile.

The indicator preferably indicates which display fields of the array can be used to display the composite data tile.

Preferably, the method comprises the step of providing a plurality of run screens, wherein each run screen is provided with a separate array of display fields for the display of data tiles, and wherein the method comprises the step of allowing a user to switch between different run screens to be displayed on the user interface display.

As the display method allows for the use of separate run screens to be shown on the user interface display, as a result a user is provided with multiple different display areas which can individually be provided with separate arrays of display fields. Accordingly the user can be provided with a plurality of different areas for the display of information.

There is also provided a display controller for a user interface display of an agricultural vehicle, the display controller provided with a storage medium having computer-readable instructions stored therein, the instructions arranged to carry out the steps of the method as described above.

There is further provided an agricultural vehicle, for example an agricultural tractor or a harvester machine, comprising a user interface display and a display controller as described above to implement the steps of the above method.

### Detailed Description of the Invention

Embodiments of the invention will now be described, by way of example only, with reference to the accompanying drawings, in which:
Fig. 1 is a side view of an agricultural tractor having a user interface display system according to the invention;
Fig. 2 is an illustration of an embodiment of user interface device of the tractor of Fig. 1;
Fig. 3 is an illustration of a user interface display for the user interface device of Fig. 2 having user-configurable display fields;
Fig. 4 is an illustration of an example configuration of display fields of the user interface display of Fig. 3;
Fig. 5 is an illustration of the user interface display of Fig. 4, providing an outline indicator when a user wishes to select an additional data tile for display as a composite data tile;
Figs. 6 and 7 are illustrations of alternative outline indicators for the user interface display of Fig. 4;
Figs. 8 and 9 are examples of the configuration of display fields of the user interface display of Fig. 3 providing a composite data tile; and
Fig. 10 is a flow chart representation of a display method embodying the invention.

The drawings are provided by way of reference only, and will be acknowledged as not to scale.

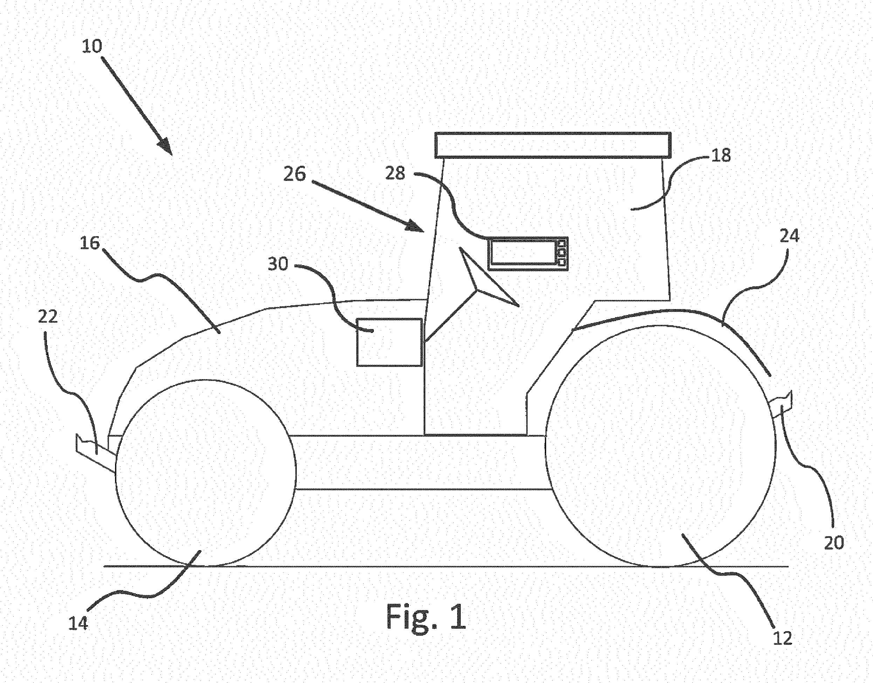

With reference to Fig. 1, an agricultural vehicle according to the invention in the form of an agricultural tractor is indicated at 10. The tractor 10 comprises rear wheels 12 and front wheels 14, a forward engine compartment 16 and a cab section 18. A rear linkage 20 is provided at the rear of the tractor 10, and a front linkage 22 is provided at the front of the tractor 10. Rear fenders 24 are provided to cover a portion of the rear wheels 12. It will be understood that the invention may also be provided in the form of an agricultural harvester machine, e.g. a combine harvester, or an applicator machine, e.g. a self-propelled sprayer vehicle.

Within the cab 18, an operator station 26 is provided, where the operator can access a user interface device 28 which is used to display information relating to tractor operation, and to control different elements of the tractor 10. The user interface device 28 may be used alone or in combination with other controls, e.g. levers, switches, etc., to operate different elements of the tractor 10, e.g. hydraulic circuits, lifting systems, and/or to control the acceleration and steering of the tractor 10.

The tractor 10 is provided with at least one electronic control unit (ECU) 30. The ECU 30 is configured to interface with the user interface device 28 and with the various systems and sensors provided about the tractor 10, to provide for monitoring and control of tractor operation. The ECU 30 is configured to receive data from the different systems and sensors of the tractor 10, and to output suitable display signals for the user interface device 28, to determine what data is displayed using the device 28. The ECU 30 can subsequently receive operator inputs provided via the user interface device 28, for the control of the different systems of the tractor 10.

It will be understood that the ECU 30 may be provided as a single processing device capable of performing a variety of commands relating to the control of the tractor, or the ECU 30 may be provided as a plurality of different controllers, e.g. a steering controller coupled with the steering system of the tractor, a display controller coupled with the user interface device 28, etc. It will be understood that the ECU 30 may be provided as a separate element of the tractor 10, or an individual display controller may be provided as a part of the user interface device 28 according to the invention.

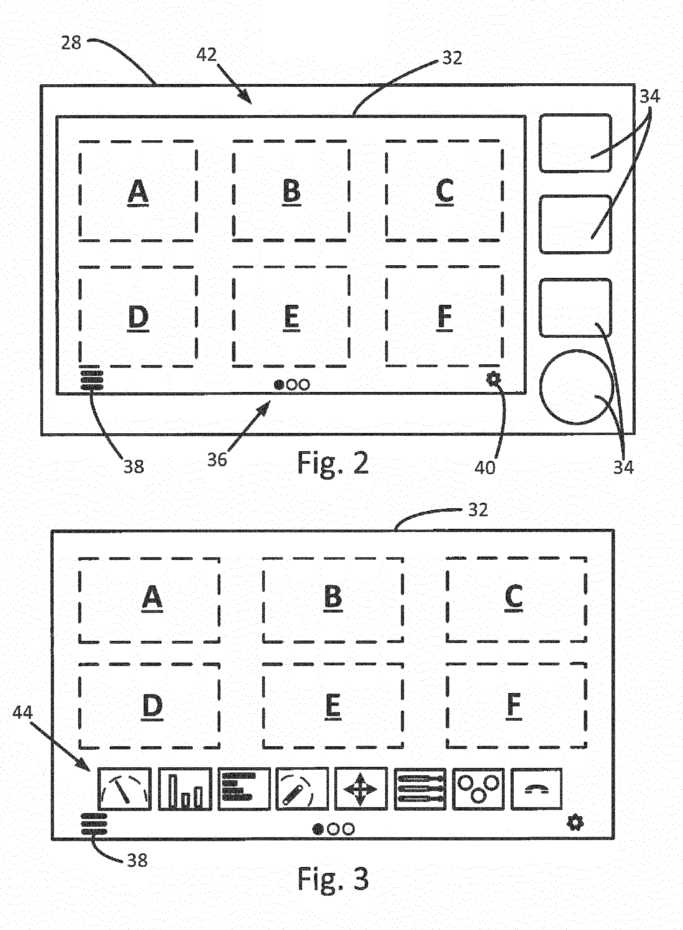

Fig. 2 provides an enlarged view of an embodiment of user interface device 28. The user interface device 28 is provided as an in-cab terminal, having a screen presenting a user interface display 32 to a user. The device 28 is provided with various controls 34, e.g. pushbuttons, dials, keypads, joysticks, etc., and/or the display 32 can be provided as a touchscreen display.

The ECU 30 controls the output of the user interface display 32, such that the display is configured to present an array of display fields to a user. In the illustrated embodiment, the user interface display 32 is provided as a 2 x 3 grid 42 of separate display fields, respectively labelled as A, B, C, D, E, F as indicated in Fig. 2. The individual display fields of the array can be adapted to display a data tile showing information relating to an associated system of the agricultural tractor 10, as will be described below.

It will be understood that the user interface display 32 can be configured to present a plurality of different run screens to a user, wherein the user can cycle through the different run screens for example by swiping to the side of the display screen. The display 32 is provided with a visual indicator 36 as to the presence of different run screens, which also serves to indicate the current run screen displayed. The different run screens can be used to provide different configurations of display fields and data tiles to a user. The display 32 is further provided with various user-selectable icons which can be selected to access different options, e.g. menus 38, display settings 40, etc.

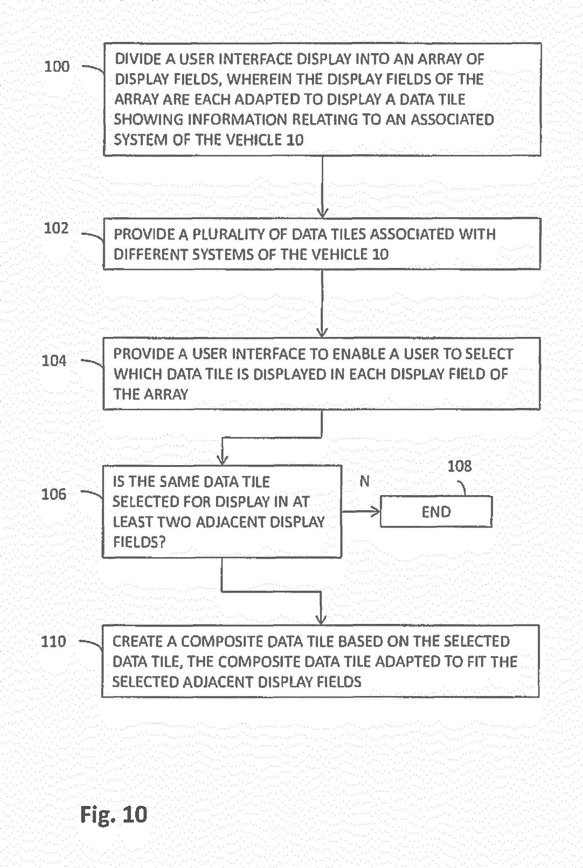

A display method for the user interface display 32 is illustrated in Fig. 10. Firstly, at step 100, the method comprises dividing the user interface display 32 into an array of display fields 42, in which the display fields of the array are each adapted to display a data tile showing information relating to an associated system of the agricultural vehicle. Next, at step 102, the plurality of data tiles associated with different systems of the agricultural vehicle are provided and, at step 104, the user interface (to enable a user to select which data tile is displayed in each display field of the array), is provided.

At step 106, a determination is made as to whether the same data tile is selected for display in at least two adjacent display fields. If not, the process ends at step 108. If so, the method further comprises the step 110 of creating a composite data tile based on the selected data tile, the composite data tile adapted to fit the selected adjacent display fields.

By creating a composite data tile based on the selection of adjacent display fields, the method can allow a user to easily select the layout of data tiles in a display, and can configure the display to devote additional screen space to data tiles of greater interest to the user.

Figures 3-9 provide example configurations of the user interface display 32 of the user interface device 28, illustrating the use of the display system and further steps of a display method according to aspects of the invention.

With reference to Fig. 3, when a user selects the menu icon 38, the display 32 is adapted to present a list of possible data tile types 44 which may be presented in the display fields 42 of the display 32. In the illustrated embodiment, the list 44 is provided at the bottom of the display 32, with the outline of the array 42 compressed to accommodate the list 44 as part of the display 32.

The list of data tile types 44 comprises a variety of information modules which are configured to display information relating to an associated system of the tractor 10. Examples of possible data tiles include, but are not limited to, systems relating to the monitoring of vehicle speed; engine output; power consumption; fuel consumption; hydraulic circuits; data relating to vehicle attachments; navigation and guidance systems; radio; telephone; internet, etc.

The user can select individual data tile types from the list 44, and select a corresponding display field A-F of the array 42 wherein the user wishes to display the data tile type in question. The selection of the data tile types from the list 44 and the selection of the corresponding display field A-F can be provided by way of discrete selection operations, or a user can click-and-drag data tiles from the list 44 into position in the array 42.

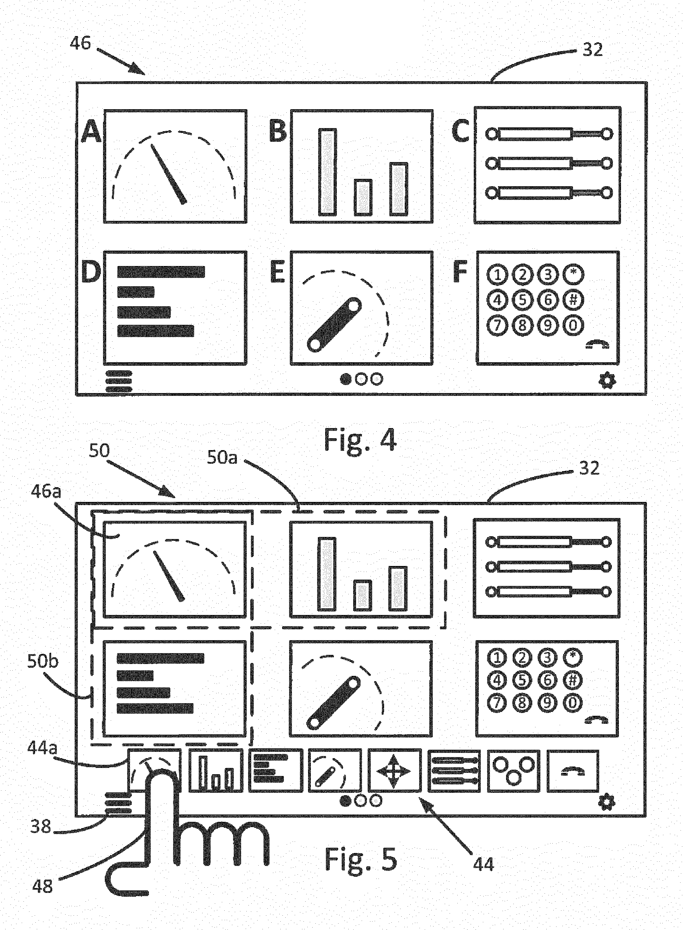

Once a user has selected the required data tile types for display, the list 44 may be closed by the user, with the user interface display 28 configured for clear and efficient display of the required information with the position of the data tiles in the display field array 42 as specified by the user, and as is shown in Fig. 4 with different data tiles indicated at 46 positioned in the different display fields A-F. It will be understood that the user interface system can be configured such that user creation of the display field array 42 having assorted data tiles displayed thereon can be replicated for different run screens of the device, by repeating of the above procedure for the available run screens.

During use of the tractor 10 and user interface device 28, a user may wish for additional control over the customisation of the information provided on the display 32, for example in terms of a larger or more clear version of the displayed data tiles 46. Accordingly, the user interface system and method of the invention is configured to generate composite data tiles, which are adapted to fit more than one display field of the array 42.

With reference to Fig. 5, the user selects the menu icon 38 to display the list of possible data tile types 44. Via a touch action 48 or through use of the appropriate controls 34, the user can select a data tile type 44a from the list 44 which is already displayed as part of the current data tiles 46 of the array 42.

The ECU 30 is configured to detect that the selected data tile type 44a corresponds to a currently-displayed data tile 46a at display field A. The ECU 30 can determine if such a data tile type 44a can be provided in an enlarged version, and if so, the ECU 30 controls the display 32 to generate at least one outline indicator 50 for a composite data tile, based on the location of the currently-displayed data tile 46 at display field A. The outline indicators 50 are used to demonstrate to a user possible configurations of a composite data tile, based on the usage of display fields which are adjacent to the currently-displayed data tile 46a at display field A. In the illustrated embodiment, the user is presented with two possible outline indicators - indicator 50a encompassing display fields A and B, and indicator 50b encompassing display fields A and D. The user can then judge how they would prefer the composite data tile to be arranged, and can select either of the suggested display fields B or D to display the selected data tile type 44a.

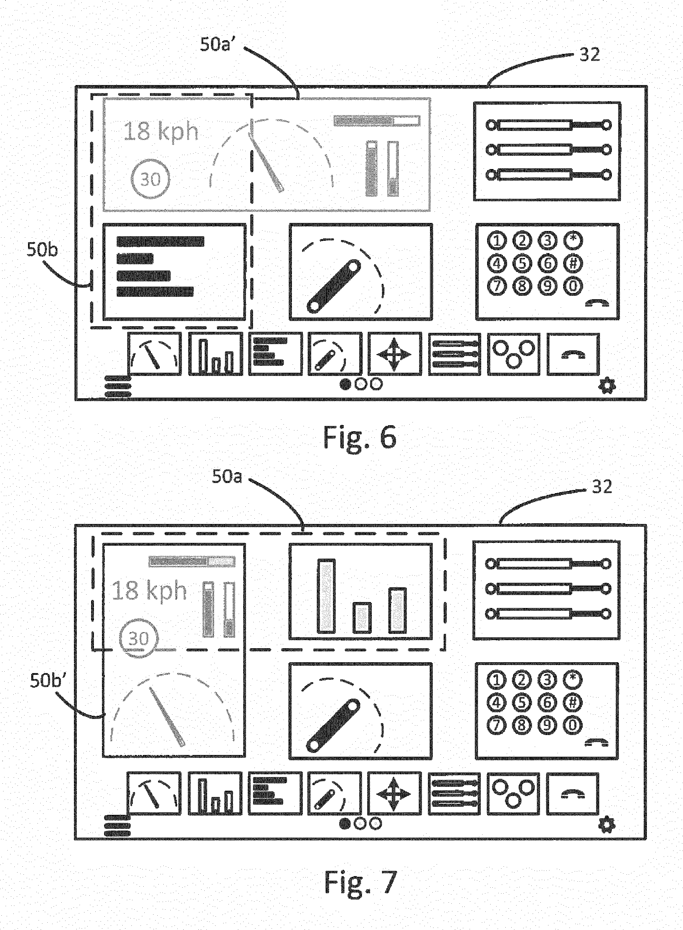

In the embodiment of Fig. 5, the outline indicators 50a,50b are provided by way of a dashed-line outline, showing the outline shape of such a composite data tile, but it will be understood that other configurations of outline indicator may be provided. For example, in Figs. 6 and 7, the system is configured to generate a transparent or ghosted version of a composite data tile as part of the outline indicator. In Fig. 6, the outline indicator 50a' provides a transparent version of a composite data tile encompassing display fields A and B. In Fig. 7, the outline indicator 50b' provides a transparent version of a composite data tile encompassing display fields A and D. It will be understood that the ECU 30 may be configured to cycle between the dashed-line outline indicators 50a,50b and the transparent outline indicators 50a',50b' as required, for example if a user hovers over the adjacent display fields in question, such that the user is provided with an indication of how the composite data tile will look when generated.

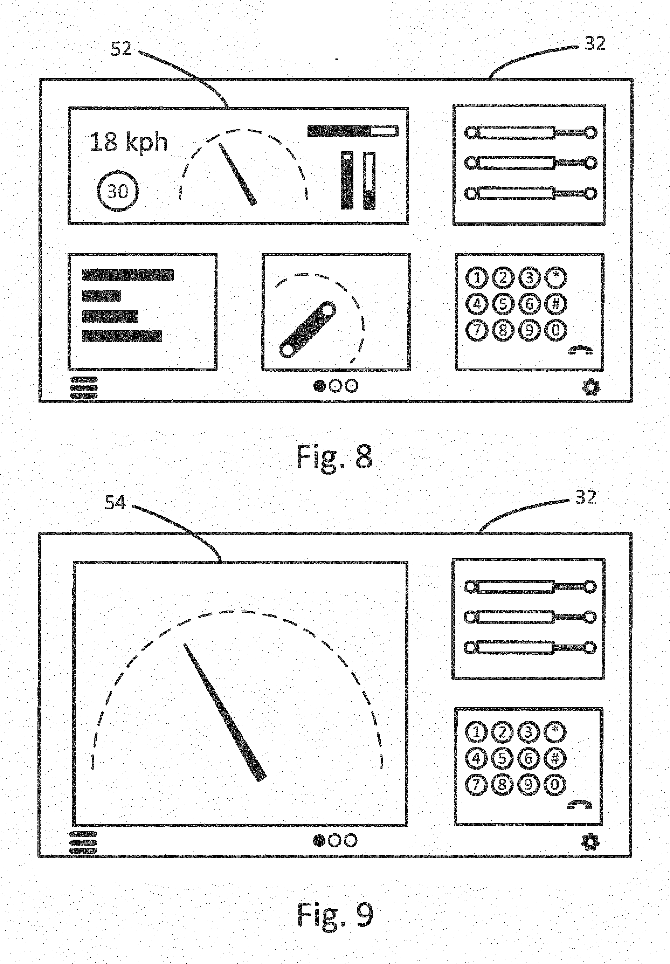

When the user selects an adjacent data field, the ECU 30 is configured to then control the display 32 to generate a composite data tile adapted to fit the selected data fields of the array 42. For example, with reference to Fig. 8, if a user selected fields A and B of the array 42 to display the data tile type 44a, a composite data tile 52 is generated and presented in the fields A and B. It will be understood that the composite data tile 52 can be provided as an adapted version of the data tile originally shown in field A, with additional relevant information provided therein. Alternatively, the composite data tile can simply be an enlarged or scaled version of the original data tile. It will further be understood that the composite data tile can be configured to encompass more than two display fields of the array 42. With reference to Fig. 9, an example of an enlarged composite data tile 54 is shown, which encompasses the display fields A, B, D and E.

While the illustrated embodiments show composite data tiles resulting in a 1x2, 2x1 or 2x2 arrangement of the tile across the display fields of the display, it will be understood that other dimensions of composite data tile may be produced through appropriate user selection, e.g. a 1x3 arrangement of display fields. In addition, it will be understood that the user interface display may be configured to present any number of different display field layouts other than a 2x3 array, e.g. a 3x3 array. This may be accomplished through use of a larger display and/or appropriate scaling of the dimensions of display fields within the display

Allowing the creation of composite data tiles as enlarged or more clearly presented versions of basic data tiles, the user interface system and method allows for a customisable user interface which can be easily adapted by a user as per their personal requirements.

The invention is not limited to the embodiments described herein, and may be modified or adapted without departing from the scope of the present invention as defined in the following claims.

## Claims

1. A display method for a user interface display of an agricultural vehicle, the method comprising the steps of:
dividing a user interface display into an array of display fields, wherein the display fields of the array are each adapted to display a data tile showing information relating to an associated system of the agricultural vehicle;
providing a plurality of data tiles associated with different systems of the agricultural vehicle; and
providing a user interface to enable a user to select which data tile is displayed in each display field of the array,
wherein, if the same data tile is selected for display in at least two adjacent display fields, the method further comprises the step of creating a composite data tile based on the selected data tile, the composite data tile adapted to fit the selected adjacent display fields.

2. The method of claim 1, wherein the step of creating a composite data tile comprises creating an enlarged version of the selected data tile.

3. The method of claim 1 or claim 2, wherein the step of creating a composite data tile comprises creating a rearranged version of the selected data tile, wherein information to be displayed by the data tile is repositioned or scaled to adapt to the area of the selected adjacent display fields.

4. The method of any one of claims 1-3, wherein the method further comprises the step of providing a list of selectable data tiles for display.

5. The method of any one of claims 1-4, wherein the method comprises the steps of: when a user selects a data tile already displayed in the array, displaying an outline indicator of possible composite versions of the selected data tile.

6. The method of claim 5, wherein the method comprises displaying an outline indicator comprising an at least partly transparent outline of a composite data tile.

7. The method of claim 5 or claim 6, wherein the method comprises displaying an outline indicator indicating the size, shape, and/or layout of the composite data tile.

8. The method of any one of claims 5-7, wherein the method comprises displaying an outline indicator indicating which display fields of the array can be used to display the composite data tile.

9. The method of any one of claims 1-8, wherein the method comprises the step of providing a plurality of run screens, wherein each run screen is provided with a separate array of display fields for the display of data tiles, and wherein the method comprises the step of allowing a user to switch between different run screens to be displayed on the user interface display.

10. A display controller for a user interface display of an agricultural vehicle, the display controller provided with a storage medium having computer-readable instructions stored therein, the instructions arranged to carry out the steps of the method as described in any one of claims 1-9 when run by the display controller.

11. An agricultural vehicle, for example an agricultural tractor or a harvester machine, comprising a user interface display and a display controller adapted to implement the steps of the method as described in any one of claims 1-9.
